Europäisches Patentamt

European Patent Office

Office européen des brevets

(11) Numéro de publication : **0 325 521 B1**

(12) # FASCICULE DE BREVET EUROPEEN

(45) Date de publication du fascicule du brevet :
**30.09.92 Bulletin 92/40**

(51) Int. Cl.$^5$ : **G01M 1/36**

(21) Numéro de dépôt : **89400125.4**

(22) Date de dépôt : **17.01.89**

(54) **Dispositif d'équilibrage automatique d'une centrifugeuse en fonctionnement.**

(30) Priorité : **18.01.88 FR 8800506**

(43) Date de publication de la demande :
**26.07.89 Bulletin 89/30**

(45) Mention de la délivrance du brevet :
**30.09.92 Bulletin 92/40**

(84) Etats contractants désignés :
**BE CH DE GB IT LI NL SE**

(56) Documents cités :
**US-A- 4 295 386**

(56) Documents cités :
**1984 SID INTERNATIONAL SYMPOSIUM,
DIGEST OF TECHNICAL PAPERS, Society for
(SID) Information Display, édition 1, juin
1984,pages 120-123, Palisades Institute for
Research Services, Inc., New York, US; J.
EYTH, Jr.: " A CGI simulation display in a
high-Genvironment"**

(73) Titulaire : **ACUTRONIC-FRANCE
Z.I. Des Dames - B.P. 59
F-78340 Les Clayes Sous Bois (FR)**

(72) Inventeur : **Perdriat, Jacques
61 Boulevard des Fossés
F-78580 Maule (FR)**

(74) Mandataire : **Thévenet, Jean-Bruno et al
Cabinet BEAU DE LOMENIE 55 rue
d'Amsterdam
F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un dispositif d'équilibrage automatique d'une centrifugeuse en fonctionnement comprenant un bras tournant comportant au moins un tube horizontal monté sur une tourelle entraînée en rotation autour d'un axe vertical par rapport à un bâti.

Les centrifugeuses sont utilisées dans de nombreux domaines et notamment en tant que centrifugeuses géotechniques pour des travaux industriels ou de recherche. Dans ce cas, on simule à l'aide d'une centrifugeuse des contraintes auxquelles peuvent être soumises des structures, par exemple sous l'effet de secousses sismiques, et on relève un certain nombre de données à partir d'essais effectués sur un modèle ou prototype à échelle réduite qui est placé dans une nacelle pendulaire suspendue à l'extrémité du bras tournant de la centrifugeuse. Lors d'essais au cours desquels les modèles de structures sont soumis à des efforts croissants ou alternés à l'aide de l'entraînement en rotation du bras tournant de la centrifugeuse à des vitesses de rotation ou en cycles alternés, un certain nombre de mesures sont effectuées sur les modèles réduits de structures afin de déterminer des modèles mathématiques représentant le comportement des structures.

Les essais sont souvent conduits jusqu'à la rupture de la structure placée dans la nacelle de la centrifugeuse. Il se produit alors de façon brutale un déséquilibre important sur la centrifugeuse. Les opérations de rééquilibrage après rupture du modèle imposent l'arrêt de la centrifugeuse, afin d'agir sur la masse ou l'emplacement des contrepoids généralement placés sur le bras tournant de façon opposée à la nacelle portant le modèle soumis aux essais de résistance mécanique. Ces opérations de rééquilibrage sont longues. Parfois, le brusque déséquilibre créé à la rupture d'un modèle peut même provoquer un endommagement de la centrifugeuse qui retarde la poursuite des essais. On notera que des déséquilibres importants peuvent se produire lors des essais, bien que l'on ne soit pas parvenu à la rupture du modèle testé. C'est par exemple le cas lors d'essais de structures coopérant avec des masses de liquide fluctuantes, notamment lors d'essais de structures de barrages ou digues.

On connait par ailleurs par le document US-A-4 295 386 un dispositif de révolution, pouvant être une centrifugeuse, qui n'a pas de bras tournant mais comprend un système d'équilibrage par déplacement de fluide. Ce système d'équilibrage est toutefois purement passif, c'est à dire non asservi à partir d'informations relatives à des déséquilibres et joue exclusivement sur les phénomènes physiques constitués par des effets de variation de pression entre la pression de liquide et la tension de vapeur, qui provoquent des ruptures de continuité d'une masse de liquide, par suite d'une mise en ébullition de celui-ci aux fortes vitesses de rotation. Un tel système conduit à une mise en oeuvre relativement complexe et qui ne présente pas toute l'adaptabilité et la sécurité requises d'un sytème industriel.

La présente invention vise à remédier aux inconvénients précités et à permettre de détecter et de compenser automatiquement, de manière simple et efficace et sans imposer l'arrêt de la centrifugeuse, le balourd susceptible d'apparaître dans une centrifugeuse en fonctionnement.

Ces buts sont atteints grâce à un dispositif d'équilibrage automatique d'une centrifugeuse en fonctionnement comprenant un bras tournant comportant au moins un tube horizontal monté sur une tourelle entraînée en rotation autour d'un axe vertical par rapport à un bâti, caractérisé en ce qu'il comprend un système de déplacement sélectif d'une masse de fluide à l'intérieur dudit tube horizontal creux et un dispositif de mesure du déséquilibre du bras tournant susceptible de présenter un balourd et en ce que le dispositif de mesure de déséquilibre comprend des capteurs disposés sur la centrifugeuse, des circuits de traitement des signaux délivrés par les capteurs pour délivrer des signaux d'alarme ou de commande de rééquilibrage en cas de détection de balourd, et des moyens de commande dudit système de déplacement sélectif d'une masse de fluide, lesdits moyens de commande réagissant aux signaux de commande de rééquilibrage délivrés par le dispositif de mesure de déséquilibre pour provoquer en temps réel un déplacement sélectif, à l'intérieur dudit tube horizontal creux, d'une masse de fluide assurant un équilibrage dynamique du bras tournant de la centrifugeuse.

De façon plus particulière, les capteurs comprennent quatre ponts de jauges d'extensométrie disposés sur des pièces élastiques incorporées dans le bâti ou dans la liaison bâti-fondation, les quatre ponts de jauges étant disposés dans un plan horizontal à égale distance de l'axe vertical de rotation du bras tournant et diamétralement opposés deux à deux selon deux directions orthogonales entre elles.

Selon une caractéristique avantageuse de l'invention, le dispositif de mesure de déséquilibre comprend un circuit de mise en forme des signaux issus des ponts de jauges, un ensemble de quatre couples d'échantillonneurs-bloqueurs connectés de manière à mémoriser les maximums et les minimums des tensions issues de chacun des circuits de mise en forme des signaux délivrés par les quatre ponts de jauges, quatre premiers circuits sommateurs à deux entrées pour recevoir chacun les signaux issus des deux échantillonneurs-bloqueurs ayant enregistré un maximum et un minimum de tension issus d'un même circuit de mise en forme, et pour déterminer la valeur absolue de la différence entre lesdits maximum et minimum de tension, un premier circuit sommateur à quatre entrées pour recevoir les signaux issus desdits quatre premiers circuits sommateurs à deux entrées, et pour déterminer la valeur moyenne des écarts entre les signaux issus des quatre premiers circuits sommateurs et des circuits d'utilisation des signaux issus du premier circuit sommateur à quatre entrées pour délivrer les informations représentatives du niveau de déséquilibre du bras tournant à des organes d'affichage et de commande du système de déplacement sélectif d'une masse de fluide à l'intérieur dudit tube horizontal creux en vue de réduire en cas de besoin le niveau de déséquilibre du bras tournant.

Conformément à un premier mode de réalisation de l'invention, le système de déplacement sélectif d'une masse de fluide à l'intérieur dudit tube horizontal creux comprend un vérin avec un piston libre présentant deux faces frontales d'extrémité délimitant à l'intérieur du cylindre creux deux chambres d'extrémité, des moyens de remplissage en huile de l'espace libre situé entre les faces frontales du piston libre ainsi que des chambres d'extrémité, un réservoir d'huile et une pompe hydraulique, et un circuit d'évacuation de l'huile située dans l'une ou l'autre des chambres d'extrémité, lequel circuit d'évacuation est muni de servovalves commandées par les signaux de commande issus du dispositif de mesure de déséquilibre.

Selon un second mode de réalisation de l'invention, le système de déplacement sélectif d'une masse de fluide à l'intérieur du tube horizontal creux comprend une paire de membranes flexibles disposées à l'intérieur du tube creux et rattachées de façon étanche à la paroi latérale du tube creux selon deux plans radiaux écartés des extrémités dudit tube, des moyens de remplissage en fluide liquide de l'espace libre compris entre les membranes, un dispositif de fourniture de fluide gazeux sous pression, et un circuit de liaison sélective entre le dispositif de fourniture de fluide gazeux sous pression et chacune des chambres à volume variable situées entre les membranes flexibles et les extrémités du tube creux, lequel circuit de liaison sélective comprend des servovalves commandées par les signaux de command issus du dispositif de mesure du déséquilibre.

Selon encore un autre mode de réalisation, le système de déplacement sélectif d'une masse de fluide à l'intérieur du tube horizontal creux comprend des première et seconde chambres délimitées par des parois fixes et séparées l'une de l'autre par une paroi transversale fixe qui inclut l'axe de rotation de la tourelle, des moyens de remplissage en fluide liquide de l'une des chambres, des conduits de mise en communication des deux chambres l'une avec l'autre, un dispositif de fourniture de fluide gazeux sous pression et un circuit de liaison sélective entre le dispositif de fourniture de fluide gazeux sous pression et chacune des chambres, lequel circuit de liaison sélective comprend des servovalves commandés par les signaux de commande issus du dispositif de mesure de déséquilibre.

Avantageusement, la commande du système de déplacement sélectif d'une masse de fluide à l'intérieur du tube horizontal creux est débrayable du dispositif de mesure de déséquilibre lorsque le bras tournant de la centrifugeuse tourne à faible vitesse, la masse d'équilibrage étant maintenue en position neutre.

L'invention s'applique également à une centrifugeuse comportant un bras tournant composé de deux tubes creux parallèles qui sont équipés chacun d'un système de déplacement sélectif d'une masse de fluide à l'intérieur de l'alésage du tube correspondant, chacun des systèmes de déplacement sélectif d'une masse de fluide étant commandé à partir d'un dispositif commun de mesure de déséquilibre.

D'autres caractéristiques et avantages de l'invention ressortiront de la description qui fait suite de modes particuliers de réalisation de l'invention, donnés à titre d'exemples, en référence aux dessins annexés, sur lesquels :

– la figure 1 est une vue schématique, avec coupe axiale du bras tournant d'une centrifugeuse équipée d'un dispositif d'équilibrage automatique conforme à un premier mode de réalisation de l'invention,

– les figures 2 et 3 sont des vues respectivement en élévation et de dessus, d'un exemple de centrifugeuse géotechnique à laquelle est applicable l'invention,

– les figures 4 et 5 sont des vues analogues à celles de la figure 1 de centrifugeuses équipées de dispositifs d'équilibrage automatique conformes respectivement à des second et troisième modes de réalisation de l'invention,

– les figures 6A à 6D représentent des courbes donnant l'évolution des signaux de sortie des capteurs du dispositif de détection de déséquilibre en fonction de la position angulaire du bras tournant de la centrifugeuse,

– la figure 7 est une vue de dessus d'une centrifugeuse équipée d'un dispositif de détection de déséquilibre selon l'invention, et montrant la position des différents capteurs dont les signaux de sortie sont représentés sur les courbes des figures 6A à 6D.

– la figure 8 représente une courbe analogue à celle de la figure 6A mais correspondant à un cas où interviennent des phénomènes parasites de dilatation ou de dérives, et

– la figure 9 est un schéma-bloc montrant un exemple de réalisation d'un dispositif de détection de déséquilibre selon l'invention.

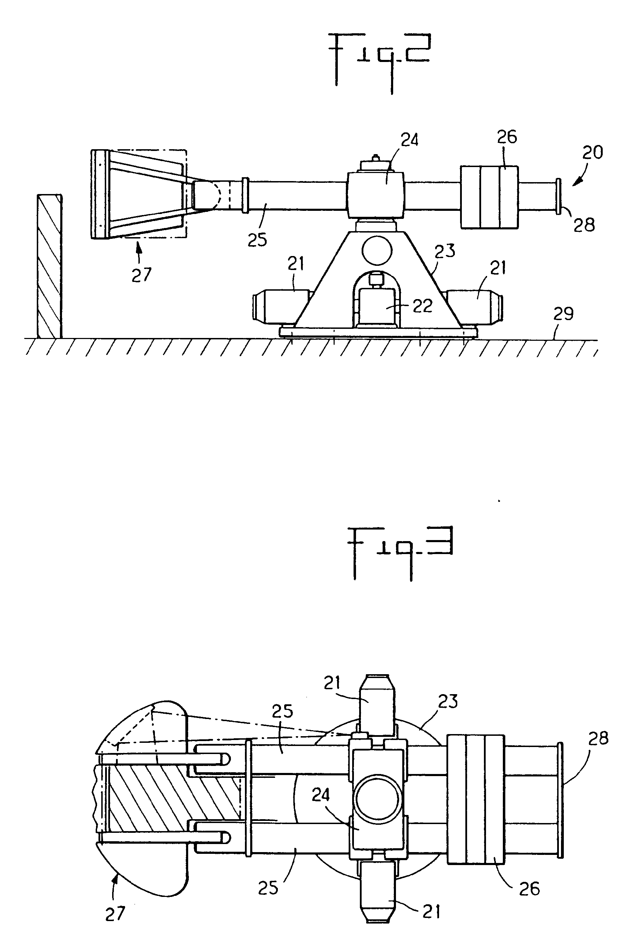

Une centrifugeuse plus particulièrement adaptée à des applications géotechniques et à laquelle est applicable l'invention est représentée sur les figures 2 et 3.

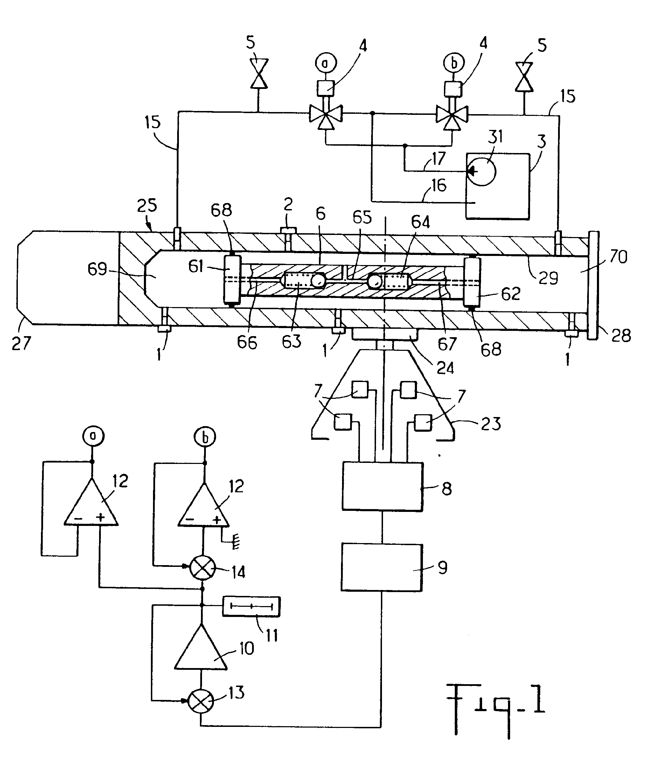

Une telle centrifugeuse comprend de façon classique un bâti 23 qui est avantageusement de forme pyramidale ou tronconique et dont la base est ancrée dans des fondations 29. Des moteurs électriques 21 coopérant avec un réducteur 22 assurent l'entraînement en rotation d'une tourelle 24 sur laquelle est monté un bras tournant 20 dont une extrémité peut être équipée d'une nacelle basculante 27 tandis que la partie du bras tournant 20 située de l'autre côté de la tourelle par rapport à la nacelle 27 porte des contrepoids 26. Comme représenté sur la figure 3, le bras tournant comprend au moins un, et de préférence, deux tubes alésés 25 fermés à leurs extrémités. Les tubes 25 en acier comprennent un forage qui s'étend presque jusqu'à l'extrémité portant la nacelle 27 (Fig 1) et l'extrémité opposée à la nacelle est obturée par une plaque 28.

Un premier mode de réalisation du dispositif d'équilibrage automatique selon l'invention est représenté sur la figure 1 qui montre en coupe axiale un tube 25 du bras tournant 20. Le tube horizontal creux 25 qui est monté sur la tourelle 24 et porte à une de ses extrémités la nacelle pivotante 27 définit un cylindre rectifié 29 à l'intérieur duquel peut se déplacer un piston libre 6 présentant deux faces frontales d'extrémité 61, 62 délimitant à l'intérieur du cylindre 29 deux chambres l'extrémité 69, 70 avec respectivement l'extrémité du tube portant la nacelle 27 et la plaque d'obturation 28.

Le piston 6 présente une partie centrale de section inférieure à celle des faces frontales d'extrémité 61, 62 afin de définir avec le cylindre 29 un espace libre annulaire.

Avant toute utilisation, de l'huile est introduite par l'orifice 2 dans l'espace annulaire situé entre le piston 6 et la cylindre 29. Des canaux 66, 67, dans lesquels sont interposés des clapets anti-retour 63, 64, sont ménagés dans le piston 6 et mettent en communication lors du remplissage en huile, l'espace annulaire compris entre le piston 6 et le cylindre 29 avec chacune des chambres d'extrémité 69, 70. Une fois le remplissage en huile terminé, l'orifice 2 est obturé et les clapets anti-retour 63, 64 empêchent tout retour de fluide des chambres d'extrémité 69, 70, vers l'espace annulaire central ménagé entre le piston 6 et le cylindre 29. Les faces frontales 61, 62 du piston 6 sont munies de joints 68, mais il convient de noter que l'étanchéité au niveau de ces faces frontales 61, 62 n'a pas besoin d'être parfaite.

Des moyens de purge 1 sont disposés dans la partie inférieure de la paroi du tube creux 25 afin de permettre une purge de chacune des chambres d'extrémité 69, 70 ainsi que de l'espace annulaire central.

Une pompe hydraulique 31, pouvant créer des pressions par exemple de l'ordre de 200.10$^5$ Pa et un réservoir d'huile 3 sont reliés respectivement par une ligne 17 et une ligne de bâche 16 à deux servovalves 4 à action proportionnelle du type 5/2 commandées par le signaux de commande issus du dispositif de mesure de déséquilibre qui sera décrit plus loin. Chacune des servovalves 4 est reliée à une chambre d'extrémité 69, 70 respectivement, par une ligne 15.

Des vannes 5 de type 2/2 disposées sur chacune des lignes 15 permettent une mise à l'évent et une évacuation de l'huile, de sorte que les purgeurs 1 peuvent à la limite être supprimés.

L'équilibrage automatique à l'aide du dispositif de la figure 1 est réalisé grâce au déplacement à l'intérieur de chaque tube creux 25 d'un piston libre 6 en acier de masse importante. Chaque tube creux 25 étant intégralement rempli d'huile à l'exception du volume du piston 6 proprement dit comme cela a été exposé plus haut, chaque piston 6 est déplacé par une action hydraulique commandée par les deux servovalves 4 à action proportionnelle qui réagissent elles-mêmes aux signaux de commande issus du dispositif de mesure de déséquilibre et d'élaboration des signaux d'erreur permettant la compensation automatique du balourd par la commande du déplacement du piston compensateur 6. Toute modification de la position du centre de gravité de la charge peut ainsi être automatiquement compensé.

La pompe hydraulique 31, le réservoir hydraulique 3 et les servovalves 4 sont disposées dans la partie centrale du bras tournant 20 de la centrifugeuse dans une zone de faibles contraintes et ne peuvent pas perturber le fonctionnement de la centrifugeuse.

Le dispositif d'équilibrage selon l'invention peut compenser le balourd dans une très grande plage de valeurs, de l'ordre de ± 20000 N avec un temps de réaction très limité, de l'ordre de 2 minutes pour retrouver l'équilibre initial. La précision du dispositif d'équilibrage est elle-même très grande puisque à des accélérations de l'ordre de dix fois la valeur g des déséquilibres de ± 1 kg peuvent être détectés.

Des détecteurs de type magnétique peuvent être utilisés pour centrer le piston à l'arrêt.

Comme cela a déjà été indiqué, deux tubes creux parallèles 25 peuvent être équipés chacun d'un système de déplacement sélectif d'une masse de fluide à l'intérieur du tube correspondant, tel que le système hydraulique à piston qui vient d'être décrit, chacun des systèmes de déplacement sélectif étant commandé à partir d'un dispositif commun de mesure de déséquilibre. Il est toutefois également possible, dans le cas de deux tubes parallèles 25 équipés chacun d'un système de compensation de déséquilibre de combiner les actions de compensation de manière spécifique par exemple pour faire déplacer le centre de masse dans un plan en dehors de l'axe de rotation de la machine.

Par ailleurs, on a considéré d'une manière générale dans l'ensemble de la description le cas d'un dispositif d'équilibrage à l'aide duquel on cherche à compenser en permanence les déséquilibres qui apparaissent. Pour certaines applications particulières, la commande des moyens de déplacement sélectif du fluide, et donc du piston 6, à l'intérieur d'un tube horizontal creux 25 peut toutefois être débrayée du dispositif de mesure de déséquilibre, lorsque le bras tournant 20 de la centrifugeuse tourne à faible vitesse. On sait en effet que les déséquilibres évoluent avec la vitesse de rotation et que les contrepoids 26 (figures 2 et 3) doivent être de préférence positionnés de manière à réaliser un équilibrage aux vitesses de rotation donnant les accélérations les plus élevées. Ainsi, selon une utilisation particulière, le dispositif de compensation de déséquilibre est débrayé jusqu'à des accélérations par exemple de l'ordre de 10 g et le faible déséquilibre détecté alors à l'aide du dispositif de mesure de balourd permet de déterminer si les contrepoids sont positionnées ou non de façon à réaliser un équilibrage aux vitesses de rotation correspondant à des accélérations de travail plus élevées par exemple de l'ordre de 100 g.

Le dispositif de mesure de déséquilibre comprend des capteurs qui peuvent être par exemple de type accélérométrique ou capacitif et permettent après traitement du signal, de délivrer des signaux d'alarme ou de commande de rééquilibrage en cas de détection de balourd. Les servovalves 4 commandant le système de déplacement sélectif du fluide hydraulique réagissent aux signaux de commande de rééquilbrage délivrés par le dispositif de mesure pour provoquer en temps réel un déplacement sélectif de fluide hydraulique à l'intérieur du ou des tubes creux 25 dans un sens qui tend à assurer un équilibrage dynamique du bras tournant de la centrifugeuse.

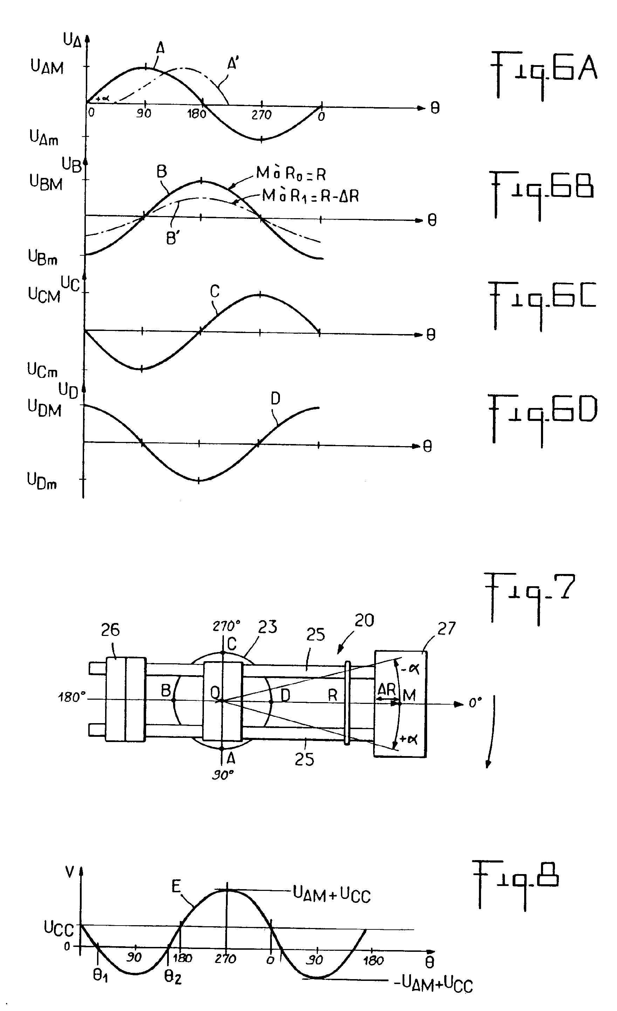

Selon un mode préférentiel de réalisation qui est illustré sur les figures 1, 4 et 5, les capteurs 7 du dispositif de mesure de déséquilibre comprennent quatre ponts de jauges d'extensométrie disposés sur des pièces élastiques incorporées dans le bâti 23 ou dans la liaison bâti 23 - fondation 29. Les quatre ponts de jauge 7 sont disposés dans un plan horizontal à égale distance de l'axe vertical de rotation du bras tournant 20 et diamétralement opposés deux à deux selon deux directions orthogonales entre elles. Les positions des quatre ponts de jauges 7 sont repérées par les lettres A, B, C, D sur la figure 7. La mise en oeuvre de ce type de capteurs sera explicitée ci-dessous.

Le bras d'une centrifugeuse en rotation a pour particularité, même s'il est équipé d'une nacelle pendulaire, d'avoir sa masse concentrée dans un volume de faible hauteur, qu'il est possible d'assimiler à plan.

Le bras est par construction symétrique et sa masse est prépondérante devant la masse embarquée, ce qui a pour conséquence de positionner le centre de masse combiné sur l'axe de symétrie du bras ou très proche de celui-ci, quelle que soit la position du centre de masse de la charge.

Le dispositif de mesure du balourd à l'aide de jauges de contraintes situées dans un plan et le système d'équilibrage associé tiennent compte de ces particularités sans, néanmoins, éliminer la possibilité d'être appliqués à des cas plus complexes.

Les efforts alternatifs de fréquence égale à la vitesse de rotation de la machine, générés par l'existence d'un balourd, sont transmis au massif auquel est fixée cette machine par son bâti 23.

Ces efforts sont mesurés par les quatre ponts de jauges d'extensométrie 7 disposés sur des pièces élastiques, faisant partie du bâti 23 ou de la liaison bâti-fondation, tous les quatre vingt dix degrés.

Les efforts engendrés dans le bâti 23 par la rotation d'un bras balourdé tournant à vitesse constante, sont sinusoïdaux.

La phase de cet effort sinusoïdal rapportée aux axes de référence du bâti, dépend de la position instantanée du balourd par rapport à ce bâti et, en conséquence, dépend de la position du bras en rotation.

Sur la figure 7, le bras tournant 20 comportant deux tubes creux 25 est représenté dans sa position d'origine, l'axe du bras 20 passant par le centre de rotation O et le centre de masse M de la nacelle 27 étant confondu avec l'axe à partir duquel sont repérées les positions angulaires. Les points A, B, C, D situés dans des positions 90°, 180°, 270° et 0° respectivement sur le bâti 23 représentent la position géométrique des ponts de jauge 7.

La forme des signaux de tension délivrés par les ponts de jauge 7 situés aux points A, B, C, D, en fonction de la position angulaire $\theta$ du bras tournant 20, et donc en fonction du temps, est représentée par les courbes A B C D des figures 6A, 6B, 6C, 6D.

En cas de présence de balourd, si le centre de masse M situé sur l'axe longitudinal du bras tournant 20 est déplacé sur un cercle de rayon R (figure 7) d'un angle + $\alpha$ ou - $\alpha$, la phase des efforts engendrés par le balourd est également décalée d'un angle correspondant + $\alpha$ ou - $\alpha$. Ceci est illustré sur la figure 6A par la courbe A'.

Si le centre de masse M est déplacé par rapport au centre de rotation O de + $\Delta$R ou de - $\Delta$R, l'amplitude maximum mesurée est modifiée de $\dfrac{R + \Delta R}{R}$ ou de $\dfrac{R - \Delta R}{R}$ (voir courbe B' de la figure 6B).

Les signaux électriques fournis par les jauges de contraintes 7 après amplification, sont proportionnels et en phase avec les efforts résultants du balourd.

Toutefois, d'autres efforts peuvent aussi affecter la tension de sortie délivrée par le système de mesure par extensométrie, principalement les dilatations.

Sans compensation particulière (thermométrique), une dilatation se traduit par l'addition d'un signal continu au signal alternatif mesuré.

D'autres phénomènes tels que la dérive à long terme des amplificateurs se traduisent aussi par l'addition d'une tension continue.

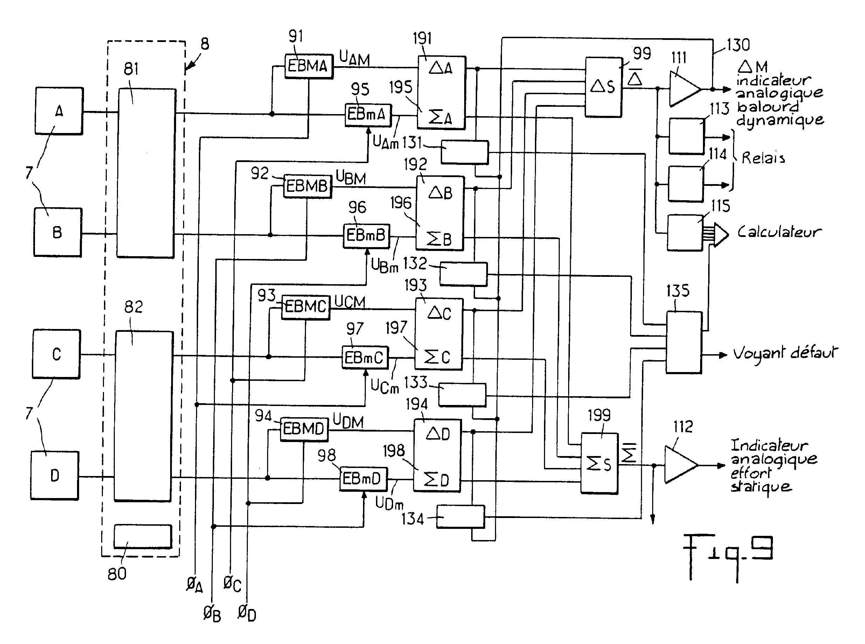

La courbe E qui représente la tension de sortie du pont de jauge A est translatée et devient conforme à la représentation de la figure 8.

L'examen de cette courbe permet de constater que :

a) les passages par O de la courbe ne correspondent plus aux points géométriques 0°, 180°, 360°, etc...,

b) la différence crête-crête des amplitudes demeure constante et égale à :

$$|U_{AM} + U_{CC} - (-U_{AM} + U_{CC})| = |2U_{AM}|$$

c) la phase réelle du signal peut être recalculée directement à partir des valeurs des déphasages $\theta_1$ et $\theta_2$ correspondant aux passages par zéro.

Le dispositif de mesure associé aux capteurs 7 a été représenté de façon schématique sur les figures 1, 4 et 5 avec un module 8 de mise en forme des signaux, un module 9 de démodulation, un étage 10 d'amplification, un ensemble 11 d'affichage des déséquilibres mesurés et des amplificateurs 12 délivrant aux servovalves 4 des signaux d'erreur a et b pour commander le fonctionnement du dispositif de compensation de déséquilibre, c'est à dire le déplacement du fluide hydraulique d'une chambre d'extrémité 69 ou 70 à l'autre 70 ou 69. Sur les figures 1, 4 et 5, les références 13 et 14 désignent des circuits sommateurs permettant l'application de signaux de contre-réaction.

La figure 9 montre de façon plus détaillée un exemple de réalisation du dispositif de mesure de déséquilibre associé aux capteurs 7.

Le dispositif de mesure de la figure 9 comprend un circuit 8 de mise en forme des signaux issus des ponts de jauges 7. Ce circuit 8 constitue un conditionneur dynamique muni d'une alimentation 80 et comportant deux paires 81, 82 de préamplificateurs avec compensation de zéro situés près des jauges de contrainte 7. Quatre couples d'échantillonneurs-bloqueurs 91, 95; 92, 96; 93, 97; 94, 98 sont prévus pour enregister les maximums et les minimums des tensions issues de chacun des circuits de mise en forme associés aux ponts de jauges 7. La commande des échantillonneurs-bloqueurs est effectuée à partir de signaux tout ou rien générés par le système de codage de position du bras tournant 20. Ces quatre signaux $\phi$ A, $\phi$ B, $\phi$ C, $\phi$ D sont décalés de 90 degrés entre eux et sont disposés de telle façon que les échantillonneurs-bloqueurs mémorisent les maximums et les minimums des tensions issues des amplificateurs 81, 82.

Quatre circuits sommateurs à deux entrées 191 à 194 reçoivent chacun les signaux issus des deux échantillonneurs-bloqueurs 91 et 95; 92 et 96; 93 et 97; 94 et 98 ayant enregistré un maximum et un minimum de tension issus d'un même circuit de mise en forme, et délivrent des signaux correspondant aux valeurs absolues des différences entre lesdits maximums et minimums de tension, désignées par $\Delta$ A, $\Delta$ B, $\Delta$ C, et $\Delta$ D pour les capteurs situés aux points A, B, C, D de la figure 7.

Un circuit sommateur à quatre entrées 99 reçoit les signaux issus des quatre sommateurs à deux entrées 191 à 194 et détermine la valeur moyenne $\overline{\Delta}$ des écarts $\Delta$A, $\Delta$B, $\Delta$C, $\Delta$D constitués par les signaux issus des circuits sommateurs à deux entrées 191 à 194.

Plusieurs circuits 111, 113, 114, 115 utilisent les signaux $\overline{\Delta}$ issus du circuit sommateur à quatre entrées 99 pour délivrer les informations representatives du niveau de déséquilibre du bras tournant à des organes d'affichage et aux servovalves 4 de commande du système de déplacement sélectif d'une masse de fluide à l'intérieur d'un tube horizontal creux 25 pour réduire lorsque cela est nécessaire le niveau de déséquilibre du bras tournant 20 de la centrifugeuse.

Le circuit 111 constitue une chaîne d'amplification pouvant être reliée à un organe d'affichage constituant un indicateur analogique du balourd dynamique. Les signaux issus de la chaîne 111 peuvent être utilisés sur une ligne 130 comme signaux de vérification du dispositif d'équilibrage.

Les entrées de circuits à seuil 113, 114 sont reliées à la sortie du circuit sommateur 99 pour déterminer deux niveaux de déséquilibre au-delà desquels une alarme ou une commande des servovalves 4 est effectuée par l'intermédiaire de relais, non représentés sur le dessin.

Le circuit 115 est constitué par un convertisseur-analogique qui convertit les valeurs mesurées sous forme numérique en vue d'un affichage de type numérique et d'un traitement des résultats de mesure à l'aide d'un ordinateur associé au dispositif de mesure et de commande de rééquilibrage.

Le dispositif de mesure de déséquilibre comprend en outre quatre circuits comparateurs 131 à 134 disposés entre la sortie du circuit sommateur à quatre entrées 99 et respectivement chacune des entrées de ce circuit sommateur 99. Les sorties des circuits comparateurs 131 à 134 sont reliées à un circuit à seuil de détection de défaut 135 qui délivre une information représentative d'un défaut lorsque le signal de sortie de l'un des comparateurs 131 à 134 dépasse une valeur prédéterminée, par exemple si la différence de la tension de sortie d'une des chaînes par rapport à la valeur moyenne excède 10 % de celle-ci, ce qui correspond à un défaut d'une des chaînes de mesure. Il est ainsi possible de déclencher une alarme en cas de défaillance d'un pont d'extensométrie ou de sa chaîne d'amplification. Cette sécurité est très importante dans le cas d'une centrifugeuse où la non détection d'un déséquilibre réel peut avoir des conséquences dramatiques.

Le dispositif de mesure de déséquilibre qui vient d'être décrit élimine les erreurs statiques et les dérives en température. Il est toutefois souvent utile de connaître l'effort statique appliqué au bâti.

Pour cela, le dispositif de mesure de déséquilibre comprend quatre seconds circuits sommateurs à deux entrées 195 à 198 qui reçoivent chacun les signaux issus de deux échantillonneurs-bloqueurs 91, 95; 92, 96; 93, 97; 94, 98 ayant enregistré un maximum et un minimum de tension à partir d'un même circuit de mise en forme ($U_{AM}$ et $U_{Am}$; $U_{BM}$ et $U_{Bm}$; $U_{CM}$ et $U_{cm}$; $U_{DM}$ et $U_{Dm}$). Ces circuits sommateurs 195 à 198 déterminent chacun la somme respectivement $\Sigma$ A, $\Sigma$ B, $\Sigma$ C, $\Sigma$ D desdits maximum et minimum de tension qui leur sont appliqués. Un second circuit sommateur à quatre entrées 199 reçoit les signaux $\Sigma$ A, $\Sigma$ B, $\Sigma$ C, $\Sigma$ D issus des quatre seconds circuits sommateurs à deux entrées 195 à 198 et détermine les valeurs moyennes $\overline{\Sigma}$ des signaux issus des quatre sommateurs 195 à 198. Un amplificateur de sortie 112 est relié à la sortie du circuit sommateur 199 et délivre à un indicateur analogique une information représentative de l'effort statique appliqué au bâti 23 par le bras tournant 20. Cette information représentant la charge statique du bâti peut être utilisée par exemple pour mesurer la masse du specimen embarqué dans la nacelle 27.

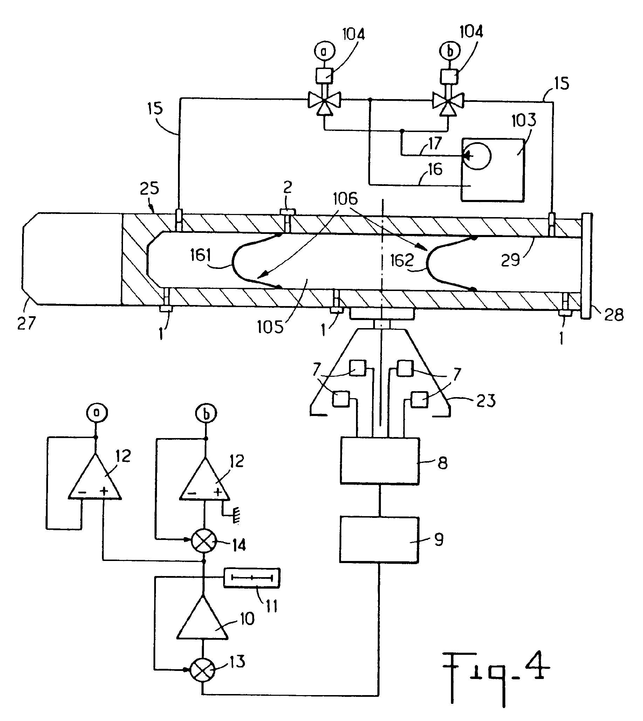

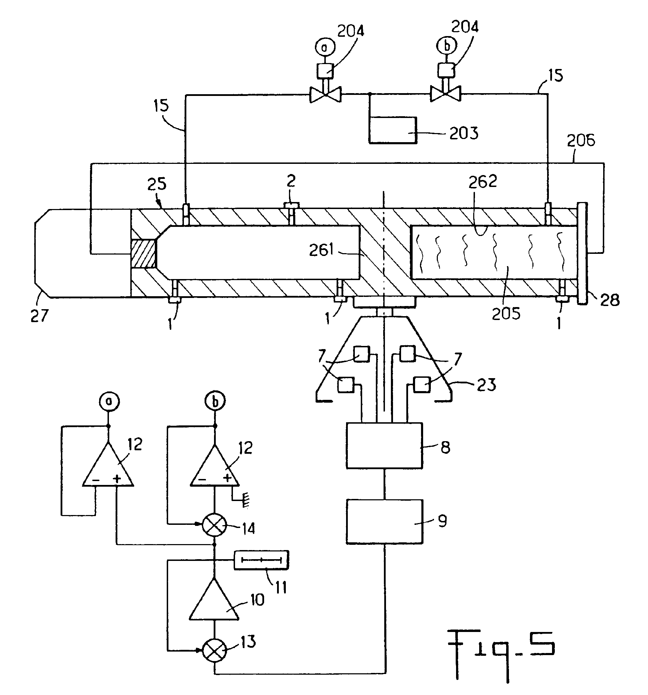

On décrira maintenant en référence aux figures 4 et 5 deux autres modes de réalisation d'un système de déplacement sélectif d'une masse de fluide à l'intérieur d'un ou plusieurs tubes horizontaux creux 25 incorporés au bras tournant 20. Les modes de réalisation des figures 4 et 5 peuvent utiliser, comme le mode de réalisation de la figure 1, le dispositif de détection de déséquilibre qui vient d'être décrit, et comprennent une paire de servovalves de commande 104 respectivement 204 commandés à partir du dispositif de mesure de balourd et jouant un rôle analogue à celui des servovalves 4 du mode de réalisation de la figure 1. Toutefois, dans les modes de réalisation des figures 4 et 5, le rééquilibrage est obtenu exclusivement par le déplacement d'une masse de fluide hydraulique et il n'est plus utilisé de piston libre.

Dans le mode de réalisation de la figure 4, une paire 106 de membranes flexibles 161, 162 sont disposées à l'intérieur de l'alésage 29 du tube creux 25 et sont rattachées de façon étanche à la paroi latérale du tube creux 25 selon deux plans radiaux situés à une certaine distance des extrémités de l'alésage 29 de façon à ménager dans l'alésage 29 deux chambres de part et d'autre d'une chambre centrale 105 délimitée par les deux membranes flexibles 161, 162 et la paroi de l'alésage 29. Un fluide hydraulique est introduit dans la chambre centrale 105 par un orifice 2. Des orifices 1 de purge des divers compartiments définis à l'intérieur du tube creux 25 sont également prévus.

Un compresseur d'air 103, par exemple à $200.10^5$ Pa, ou un réservoir d'air sous pression, est relié par des lignes de sortie 17 et de retour 16 aux servovalves 104, elles-mêmes reliées par des lignes 15 aux deux chambres à volume variable situées entre les membranes flexibles 161, 162 et les extrémités du tube creux 25.

En cas de mesure d'un déséquilibre par le dispositif de détection de déséquilibre, des signaux a et b sont appliqués aux servovalves 104 pour appliquer de l'air sous pression dans l'une ou l'autre des deux chambres d'extrémité de façon à permettre, grâce aux membranes flexibles 161, 162 un déplacement de la masse de liquide située dans la chambre centrale 105 et ainsi contribuer à effectuer en temps réel un rééquilibrage du bras tournant 20 de la centrifugeuse.

Le mode de réalisation de la figure 5 est analogue à celui de la figure 4 dans la mesure où il permet également de provoquer à partir d'air comprimé, le déplacement d'une masse de liquide servant à rééquilibrer le bras d'une centrifugeuse. Toutefois, dans le cas de la figure 5, on n'utilise pas de membranes flexibles, mais le tube creux 25 définit deux chambres 261, 262 délimitées par des parois fixes et séparées l'une de l'autre par une paroi transversale fixe qui inclut l'axe de rotation de la tourelle.

Des moyens 2 de remplissage en fluide liquide de l'une des chambres, par exemple la chambre 261, sont prévus dans la paroi latérale du tube creux 25, et des moyens de purge 1 sont ménagés dans la paroi inférieure de chacune des chambres 261, 262. Une canalisation 206 assure en outre la mise en communication des deux chambres 261, 262 l'une avec l'autre. Un dispositif 203 de fourniture d'air comprimé ou d'un autre fluide gazeux sous pression peut être relié sélectivement par des servovalves 204 commandées à partir du dispositif de mesure de déséquilibre, et à travers des conduits 15 à l'une ou l'autre des chambres 261, 262.

On a représenté sur la figure 5 le cas où le fluide liquide 205 initialement dans la chambre 261 a été chassé par le conduit 206 vers la seconde chambre 262 après application d'air comprimé dans la chambre 261 à partir du réservoir d'air comprimé 203 et à travers la servovalve 204 commandée par les signaux de commande a délivrés par le dispositif électronique de mesure de déséquilibre.

Compte tenu de la densité des fluides liquides pouvant être utilisés, qui est moins grande que celle d'un piston par exemple en acier, il reste cependant en général préférable de réaliser un rééquilibrage en utilisant le déplacement d'un fluide hydraulique combiné au déplacement d'une masse solide (piston libre 6), comme dans le cas du mode de réalisation de la figure 1, plutôt que de réaliser intégralement le rééquilibrage dynamique à l'aide de la seule masse de liquide déplacée.

On notera par ailleurs que les tubes creux 25 auxquels est appliqué le système d'équilibrage dynamique selon l'invention peuvent préexister dans le bras tournant de la centrifugeuse en tant qu'éléments de support ou être rapportés sur le bras tournant en vue de réaliser spécifiquement la fonction d'équilibrage. Afin de pouvoir résister à l'application d'efforts importants, par exemple en cas de cycles alternés d'application d'efforts importants en sens inverses à l'extrémité du bras tournant, il est nécessaire que les tubes creux 25 alésés et rodés soient réalisés en acier de haute qualité. Le montage d'un piston libre tel que le piston 6 de la figure 1 est en revanche relativement aisé de sorte que l'adaptation d'un système d'équilibrage selon l'invention à des bras tournants de centrifugeuses déjà équipés de tubes creux de haute qualité est particulièrement simple et économique.

## Revendications

1. Dispositif d'équilibrage automatique d'une centrifugeuse en fonctionnement comprenant un bras tournant (20) comportant au moins un tube horizontal (25) monté sur une tourelle (24) entraînée en rotation autour d'un axe vertical par rapport à un bâti (23), caractérisé en ce qu'il comprend un système de déplacement sélectif d'une masse de fluide à l'intérieur dudit tube horizontal creux (25) et un dispositif (7 à 14) de mesure du déséquilibre du bras tournant (20) susceptible de présenter un balourd et en ce que le dispositif (7 à 14) de mesure de déséquilibre comprend des capteurs (7) disposés sur la centrifugeuse, des circuits (13 à 14) de traitement des signaux délivrés par les capteurs pour délivrer des signaux d'alarme ou de commande de rééquilibrage en cas de détection de balourd, et des moyens (4; 104; 204) de commande dudit système de déplacement sélectif d'une masse de fluide, lesdits moyens de commande réagissant aux signaux de commande de rééquilibrage délivrés par le dispositif (8 à 14) de mesure de déséquilibre pour provoquer en temps réel un déplacement sélectif, à l'intérieur dudit tube horizontal creux (25), d'une masse de fluide assurant un équilibrage dynamique du bras tournant (20) de la centrifugeuse.

2. Dispositif selon la revendication 1, caractérisé en ce que les capteurs (7) comprennent quatre ponts de jauges d'extensométrie disposés sur des pièces élastiques incorporées dans le bâti (23) ou dans la liaison bâti (23)- fondation (29), les quatre ponts de jauges (7) étant disposés dans un plan horizontal à égale distance de l'axe vertical de rotation du bras tournant (20) et diamétralement opposés deux à deux selon deux directions orthogonales entre elles.

3. Dispositif selon la revendication 2, caractérisé en ce que le dispositif (7 à 14) de mesure de déséquilibre comprend un circuit (8) de mise en forme des signaux issus des ponts de jauges (7), un ensemble du quatre couples d'échantillonneurs-bloqueurs (91 à 98) connectés de manière à mémoriser les maximums et les minimums des tensions issues de chacun des circuits de mise en forme des signaux délivrés par les quatre ponts de jauges (7), quatre premiers circuits sommateurs à deux entrées (191 à 194) pour recevoir chacun les signaux issus des deux échantillonneurs-bloqueurs (91, 95; 92, 96; 93, 97; 94, 98) ayant enregistré un maximum et un minimum de tension d'un même circuit de mise en forme, et pour déterminer la valeur absolue de la différence entre lesdits maximum et minimum de tension, un premier circuit sommateur à quatre entrées (99) pour recevoir les signaux issus desdits quatre premiers circuits sommateurs à deux entrées (91 à 94), et pour déterminer la valeur moyenne des écarts entre les signaux issus des quatre premiers circuits sommateurs (191 à 194) et des circuits (111, 113, 114, 115) d'utilisation des signaux issus du premier circuit sommateur à quatre entrées (99) pour délivrer les informations représentatives du niveau de déséquilibre du bras tournant à des organes d'affichage et de commande du système de déplacement sélectif d'une masse de fluide à l'intérieur dudit tube horizontal creux (25) en vue de réduire en cas de besoin le niveau de déséquilibre du bras tournant (20).

4. Dispositif selon la revendication 3, caractérisé en ce que le dispositif de mesure de déséquilibre comprend en outre quatre circuits comparateurs (131 à 134) disposés entre la sortie du premier circuit sommateur à quatre entrées (99) et respectivement chacune des entrées dudit premier circuit sommateur à quatre entrées (99), et en ce que les sorties des circuits comparateurs (131 à 134) sont reliées à un circuit à seuil de détection de défaut (135) qui délivre une information représentative d'un défaut lorsque le signal de sortie de l'un des comparateurs (131 à 134) dépasse une valeur prédéterminée.

5. Dispositif selon la revendication 3 ou la revendication 4, caractérisé en ce que le dispositif de mesure de déséquilibre comprend en outre quatre seconds circuits sommateurs à deux entrées (195 à 198) pour recevoir chacun les signaux issus des deux échantillonneurs-bloqueurs (91, 95; 92, 96; 93, 97; 94, 98) ayant enregistré un maximum et un minimum de tension issus d'un même circuit de mise en forme, et pour déterminer la somme desdits maximum et minimum de tension, un second circuit sommateur à quatre entrées (199) pour recevoir les signaux issus desdits quatre seconds circuits sommateurs à deux entrées (195 à 198), et pour déterminer la valeur moyenne des signaux issus des quatre seconds circuits sommateurs à deux entrées (195 à 198), et des circuits (112) d'utilisation des signaux issus du second circuit sommateur à quatre entrées (199) pour délivrer des informations représentatives de l'effort statique exercé sur le bâti (23) par le bras tournant (20).

6. Dispositif selon l'une quelconque des revendications 1 à 5, caractérisé en ce que le système de déplacement sélectif d'une masse de fluide à l'intérieur dudit tube horizontal creux (25) comprend un vérin avec un piston libre (6) présentant deux faces frontales d'extrémité (61, 62) délimitant à l'intérieur du cylindre creux deux chambres d'extrémité (69, 70), des moyens de remplissage en huile de l'espace libre situé entre les faces frontales (61, 62) du piston libre (6) ainsi que des chambres d'extrémité (69, 70), un réservoir d'huile (3) et une pompe hydraulique (31), et un circuit d'évacuation de l'huile située dans l'une ou l'autre des chambres d'extrémité (69, 70), lequel circuit d'évacuation est muni de servovalves (4) commandées par les signaux de commande issus du dispositif de mesure de déséquilibre.

7. Dispositif selon la revendication 6, caractérisé en ce que lesdits moyens de remplissage en huile comprennent un orifice (2) d'introduction d'huile situé dans la partie centrale du tube horizontal creux (25) pour introduire de l'huile dans un espace annulaire compris entre le piston libre (6) et l'alésage (29) du tube creux (25) entre les faces frontales d'extrémité (61, 62), des conduits (66, 67) ménagés dans le corps du piston libre (6) pour mettre en communication ledit espace annulaire avec respectivement chacune des chambres d'extrémité (69, 70) et des clapets anti-retour (63, 64) disposés sur chacun des conduits (66, 67) pour empêcher un retour de fluide des chambres d'extrémité (69, 70) vers ledit espace annulaire.

8. Dispositif selon l'une quelconque des revendications 1 à 5, caractérisé en ce que le système de déplacement sélectif d'une masse de fluide à l'intérieur du tube horizontal creux comprend une paire de membranes flexibles (161, 162) disposées à l'intérieur du tube creux et rattachées de façon étanche à la paroi latérale du tube creux selon deux plans radiaux écartés des extrémités dudit tube, des moyens de remplissage en fluide liquide de l'espace libre compris entre les membranes (161, 162), un dispositif (103) de fourniture de fluide gazeux sous pression, et un circuit de liaison sélective entre le dispositif (103) de fourniture de fluide gazeux sous pression et chacune des chambres à volume variable situées entre les membranes flexibles et les extrémités du tube creux, lequel circuit de liaison sélective comprend des servovalves (104) commandées par les signaux de commande issus du dispositif de mesure du déséquilibre.

9. Dispositif selon l'une quelconque des revendications 1 à 5, caractérisé en ce que le système de déplacement sélectif d'une masse de fluide à l'intérieur du tube horizontal creux comprend des première et seconde chambres (261, 262) délimitées par des parois fixes et séparées l'une de l'autre par une paroi transversale fixe qui inclut l'axe de rotation de la tourelle, des moyens (2) de remplissage en fluide liquide de l'une des chambres (261, 262), des conduits (206) de mise en communication des deux chambres (261, 262) l'une avec l'autre, un dispositif (203) de fourniture de fluide gazeux sous pression et un circuit de liaison sélective entre le dispositif (203) de fourniture de fluide gazeux sous pression et chacune des chambres (261, 262), lequel circuit de liaison sélective comprend des servovalves (204) commandées par les signaux de commande issus du dispositif de mesure de déséquilibre.

10. Dispositif selon la revendication 8 ou la revendication 9, caractérisé en ce que le fluide gazeux sous pression est de l'air comprimé.

11. Dispositif selon l'une quelconque des revendications 6 et 7, caractérisé en ce qu'il comprend en outre des moyens de type magnétique pour centrer le piston libre (6) à l'arrêt de la machine.

12. Dispositif selon l'une quelconque des revendications 1 à 11, caractérisé en ce que la commande du système de déplacement sélectif d'une masse de fluide à l'intérieur du tube horizontal creux est débrayable du dispositif de mesure de déséquilibre lorsque le bras tournant de la centrifugeuse tourne à faible vitesse, la masse d'équilibrage étant maintenue en position neutre.

13. Dispositif selon l'une quelconque des revendications 1 à 12, caractérisé en ce qu'il comprend un bras tournant (20) composé de deux tubes creux (25) parallèles équipés chacun d'un système de déplacement sélectif d'une masse de fluide à l'intérieur de l'alésage du tube correspondant et en ce que chacun des systèmes de déplacement sélectif d'une masse de fluide est commandé à partir d'un dispositif commun de mesure de déséquilibre.

**Claims**

1. System for automatically balancing a centrifuge in operation, the centrifuge including a rotary arm (20) including at least one horizontal tube (25) mounted on a turret (24) for rotation about a vertical axis relative to a stand (23),
characterized in that it comprises a system for selectively displacing a mass of fluid inside said hollow horizontal tube (25), and a circuit (7 to 14) for measuring any unbalance of the rotary arm (20) which may be out-of-balance, and in that the circuit (7 to 14) for measuring the unbalance comprises sensors (7) disposed on the centrifuge, circuits (13 to 14) for processing the signals delivered by the sensors in order to deliver alarm signals or rebalancing control signals in the event of unbalance being detected, and control means (4; 104; 204) for controlling said system for selectively displacing a mass of fluid, said control means responding to rebalancing control signals delivered by the unbalance measuring circuit (8 to 14) in order to give rise to selective real time displacement inside said hollow horizontal tube (25) of a mass of fluid for dynamically rebalancing the rotating arm (20) of the centrifuge.

2.  System according to claim 1, characterized in that the sensors (7) comprise four wire strain-gauge bridges disposed on elastically deformable parts incorporated in the stand (23) or in the connections between the stand (23) and its foundation (29), with the four strain-gauge bridges (7) lying in horizontal plane at equal distances from the vertical axis of rotation of the rotary arm (20) and being diametrically opposed in pairs along two mutually orthogonal directions.

3.  System according to claim 2, characterized in that the unbalance measuring circuit (7 to 14) comprises a signal-shaping circuit (8) for shaping the signals delivered by the strain-gauge bridges (7), a set of four pairs of sample-and-hold circuits (91 to 98) connected so as to store the voltage maxima and the voltage minima delivered by each of the circuits for shaping the signals delivered by the four strain-gauge bridges (7), four first two-input summing circuits (191 to 194) each connected to receive the signals delivered by a pair of the sample-and-hold circuits (91, 95; 92, 96; 93, 97; 94, 98) recording the voltage maximum and the voltage minimum from a respective one of the signal-shaping circuit, and for determining the absolute value of the difference between said voltage maximum and said voltage minimum, a first four-input summing circuit (99) connected to receive the signals from said first four two-input summing circuits (91 to 94) and for determining the mean value of the differences between the signals delivered by the four first summing circuits (191 to 194) and the circuits (111, 113, 114, 115) for using the signals delivered by the first four-input summing circuit (99) in order to deliver signals representative of the level of unbalance in the rotating arm to a display member and to members for controlling the system for selectively displacing a mass of fluid inside said hollow horizontal tube (25) in order to reduce the level of unbalance in the rotating arm (20), when necessary.

4.  System according to claim 3, characterized in that the unbalance measuring circuit further includes four comparator circuits (131 to 134) disposed between the output from the first four-input summing circuit (99) and respective ones of each of the inputs to said first four-input circuit (99), and in that the outputs from the comparator circuits (131 to 134) are connected to a fault-detection threshold circuit (135) which delivers a signal representative of a fault when the output signal from any one of the comparators (131 to 134) exceeds a predetermined value.

5.  System according to claim 3 or claim 4, characterized in that the unbalance measuring circuit further includes four second two-input summing circuits (195 to 198) each connected to receive the signals delivered by a corresponding pair of the sample-and-hold circuits (91, 95; 92, 96; 93, 97; 94, 98) recording the voltage maximum and the voltage minimum from a respective one of the signal-shaping circuits and for determining the sum of said voltage maximum and said voltage minimum, a second four-input summing circuit (199) for receiving the signals from said four second two-input summing circuits (195 to 198) and for determining the mean value of the signals from said four second two-input summing circuits (195 to 198), and circuits (112) for using the signals delivered by the second four-input summing circuit (199) in order to deliver a signal representative of the static force exerted on the stand (23) by the rotary arm (20).

6.  System according to any one of claims 1 to 5, characterized in that the system for selectively displacing a mass of fluid inside said hollow horizontal tube (25) comprises an actuator having a free piston (6) with two transverse end faces (61, 62) delimiting two end chambers, (69, 70) inside the hollow cylinder, filling means for filling the empty space situated between the transverse end faces (61, 62) of the free piston (6) and the end chambers (69, 70) with oil, an oil tank (3) together with a hydraulic pump (31) and an oil-removing circuit for removing the oil situated in one or other of the end chambers (69, 70), said oil-removing circuit being provided with servo-valves (4) under the control of control signals generated by the unbalance measuring circuit.

7. System according to claim 6, characterized in that said filling means comprise an oil insertion orifice (2) situated in the middle portion of the hollow horizontal tube (25) in order to insert oil into an annular space lying between the free piston (6) and the bore (29) of the hollow tube (25) between the two transverse end faces (61, 62), ducts (66, 67) provided in the body of the free piston (6) in order to put said annular space into communication with respective ones of the end chambers (69, 70), and non-return valves (63, 64) disposed in each of the ducts (66, 67) in order to prevent fluid from returning from the end chambers (69, 70) to said annular space.

8. System according to any one of claims 1 to 5, characterized in that the system for selectively displacing a mass of fluid inside the hollow horizontal tube comprises a pair of flexible membranes (161, 162) disposed inside the hollow tube and connected in fluid-tight manner to the side wall of the hollow tube in two radial planes at respective distances from the ends of said tube, means for filling the empty space between the membranes (161, 162) with a liquid fluid, a device (103) for providing a gaseous fluid member under pressure, and a selective connection circuit between said device (103) for supplying a gaseous fluid under pressure and each of the variable volume chambers situated between the flexible membranes and the corresponding ends of the hollow tube, said selective connection circuit including servo-valves (104) controlled by control signals delivered by the unbalance measuring circuit.

9. System according to any one of claims 1 to 5, characterized in that the system for selectively displacing a mass of fluid inside the hollow horizontal tube comprises a first chamber (261) and a second chamber (262) delimited by fixed walls and separated from each other by a fixed transverse wall which includes the axis of rotation of the turret, means (2) for filling one of the chambers (261, 262) with a liquid fluid, ducts (206) for putting the two chambers (261, 262) into communication with each other, a device (203) for providing a gaseous fluid under pressure, and a selective connection circuit between the device (203) for providing the gaseous fluid under pressure and each of the chambers (261,262), said selective connection circuit including servo-valves (204) controlled by control signals delivered by the unbalance measuring circuit.

10. System according to claim 8 or claim 9, characterized in that the gaseous fluid under pressure is compressed air.

11. System according to any one of claims 6 to 7, characterized in that it includes means of a magnetic type for centering the free piston (6) when the centrifuge is stationary.

12. Device according to any one of claims 1 to 11, characterized in that the control of the system for selectively displacing a mass of fluid inside the hollow horizontal tube is capable of being disengaged from the unbalance measuring circuit when the rotary arm of the centrifuge is rotating at a low speed, with the balancing mass being maintained in a neutral position.

13. System according to any one of claims 1 to 12, characterized in that it includes a rotary arm (20) constituted by two parallel hollow tubes (25) each fitted with a system for selectively displacing a mass of fluid inside the bore of the corresponding tube, and in that each of the systems for selectively displacing a mass of fluid is controlled from a common unbalance measuring circuit.

## Patentansprüche

1. Automatische Auswuchtvorrichtung für eine Zentrifuge im Betrieb mit einem Dreharm (20), der mindestens ein horizontales Rohr (25) aufweist, das auf einem Halter (24) angebrach ist, und das um eine Vertikalachse bezüglich eines Rahmens (23) gedreht wird,
gekennzeichnet durch ein System zur selektiven Bewegung einer Fluidmasse im Inneren des Horizontalrohrs (25) und eine Vorrichtung (7-14) zur Messung des Ungleichgewichts des Dreharms (20), der eine Unwucht aufweisen kann, und dadurch, daß die Vorrichtung (7-14) zur Messung des Ungleichgewichts Detektoren (7) aufweist, die auf der Zentrifuge angeordnet sind, Signalverarbeitungsschaltungen (13 und 14) zur Verarbeitung der Signale, die von diesen Detektoren geliefert werden, um Alarmsignale oder Steuersignale für das Wuchten im Falle der Erfassung einer Unwucht zu liefern und Steuermittel (4; 104; 204) für das System zur selektiven Bewegung einer Fluidmasse, wobei die Steuermittel auf Steuersignale zur Auswuchtung reagieren, die von der Meßvorrichtung der Unwucht (8-14) geliefert werden, um in Echtzeit eine selektive Verschiebung einer Fluidmasse im Inneren des hohen horizontalen Rohrs (25) zu bewirken, das ein dynamisches Gleichgewicht des Dreharms (20) der Zentrifuge gewährleistet.

2. Vorrichtung nach Anspruch 1, dadurch gekennzeichnet, daß die Detektoren (7) vier Dehnstreifenmeßbrücken aufweichen, die auf elastischen Teilen angeordnet sind, die in dem Rahmen (23) oder in der Verbindung zwischen dem Rahmen (23) und dem Fundament (29) integriert sind, wobei die vier Dehnstreifenmeßbrükken (7) in einer Horizontalbene in gleichen Abständen zu der Vertikaldrehachse des Dreharms (20) und jeweils zu zweit diametral gegenüberliegend in zwei aufeinander senkrecht stehenden Richtungen angeordnet sind.

3. Vorrichtung nach Anspruch 2, dadurch gekennzeichnet, daß die Vorrichtung (7-14) zur Messung der Unwucht eine Signalformungsschaltung (8) aufweist, die die von den Drehnstreifenmeßbrücken ausgegebenen Signale formt sowie eine Gruppe von vier Paaren von Blockiersamplern (91-98), die so verschaltet sind, daß sie die Maxima und Minima der Spannungen speichern, die von jedem der Signalformschaltungen zur Formung der von den vier Dehnstreifenmeßbrücken (7) gelieferten Signale speichern, wobei vier erste Summierschaltungen mit zwei Eingängen (191-194) den jeweiligen Empfang der von den beiden Blockiersamplern (91, 95; 92, 96; 93, 97; 94, 98) ein Spannungsmaximum und ein Spannungsminimum gespeichert haben, die von derselben Formschaltung abgegeben wurden, und wobei zur Bestimmung des Absolutwerts der Differenz zwischen den Spannungsmaxima und Spannungsminima eine erste Summierschaltung mit vier Eingängen (99) vorgesehen ist, um die von den vier ersten Summierschaltungen mit zwei Eingängen (91-94) emittierten Signale zu empfangen und um den Mittelwert des Abstandes zwischen den Signallen zu ermitteln, die von den vier ersten Summierschaltungen (191-194) und den Schaltungen (111, 113, 114, 115) Verwendung der Signale zu ermitteln, die von der ersten Summierschaltung mit vier Eingängen (99) emittiert werden, um die Infromationen, die für den Betrag der Unwucht des Dreharmes repräsentativ sind, an Anzeigeorgane und an Steuerorgane des Systems zur selektiven Bewegung einer Fluidmasse im Inneren des hohlen Horizontalrohrs (25) zu liefern, um im Bedarfsfall den Betrag der Unwucht des Dreharmes (20) zu vermindern.

4. Vorrichtung nach Anspruch 3, dadurch gekennzeichnet, daß die Vorrichtung zur Messung der Unwucht ferner vier Vergleicherschaltungen (131-134) aufweist, die zwischen dem Ausgang der ersten Summierschaltung mit vier Eingängen (99) und jeweils einem Eingang der ersten Summierschaltung mit vier Eingängen (99) angeordnet sind und dadurch, daß die Ausgänge der Vergleicherschaltunger (131-134) an eine Schwellenwerstschaltung zur Erfassung eines Fehlers (135) geschaltet sind, die eine Information liefert, die einen Fehler anzeigt, während das Ausgangssignal eines der Vergleicher (131-134) einen vorbestimmten Wert überschreitet.

5. Vorrichtung nach Anspruch 3 oder Anspruch 4, dadurch gekennzeichnet, daß die Vorrichtung zur Messung einer Unwucht ferner vier zweite Summierschaltungen mit zwei Eingängen (195-198) aufweist, um jeweils Signale zu empfangen, die von den beiden Samplerblockierern (91, 95; 92, 96; 93, 97; 94, 98) ausgegeben werden, die ein Spannungsmaximum und ein Spannungsminimum registriert haben, das von einer selben Signalformungsschaltung ausgegeben wird und zur Bestimmung der Summe des Spannungsmaximums und des Spannungsminimums, einer zweiten Summierschaltung mit vier Eingängen (199) zum Empfang von Signalen, die von den vier zweiten Summierschaltungen mit zwei Eingängen (195-198) ausgegeben werden, und zur Bestimmung des Mittelwertes der Signale, die von den vier zweiten Summierschaltungen mit zwei Eingängen (195-198) ausgegeben werden, und Schaltungen (112) zur Verwendung der von der zweiten Summierschaltung mit vier Eingängen (199) ausgegebenen Signale zum Liefern von Informationen, die die statische Kraft widergeben, die von dem Dreharm (20) ausgehend auf den Rahmen (23) wirkt.

6. Vorrichtung nach einem der Ansprüche 1-5, dadurch gekennzeichnet, daß das System zur selektiven Bewegung einer Fluidmasse im Inneren des hohlen horizontalen Rohrs (25) einen Kolben mit einem freibeweglichen Zylinder (6) aufweist, der zwei Endstirnflächen aufweist (61, 62), die im Inneren des Hohlzylinders zwei Endkammern (69, 70) begrenzen, Mittel zum Auffüllen des freien Raums zwischen den Stirnflächen (61, 62) des freibeweglichen Kolbens (6) sowie der Endkammern (69, 70) mit Öl, einen Ölbehälter (3) und eine Hydraulikpumpe (31) und ein Ölablaßleitungssystem für das Öl, das in der einen oder anderen der Endkammern (69, 70) vorhanden ist, wobei das Ablaßleitungssystem mit Servoventilen (4) versehen ist, die von den Steuersignalen betätigt werden, die von der Meßvorrichtung der Unwucht gesteuert werden

7. Vorrichtung nach Anspruch 6, dadurch gekennzeichnet, daß die Mittel zum Auffüllen mit Öl eine Öleinfüllöffnung (2) aufweisen, die in dem mittleren Bereich des hohlen horizontalen Rohrs (25) gelegen ist, zum Einfüllen des Öls in einen Ringraum zwischen dem freibeweglichen Kolben und der Bohrung (29) des hohlen Rohres (25) zwischen den Stirnseiten der Enden (61, 62), wobei die Leitungen (66, 67) in den Körper des freibeweglichen Kolbens (6) eingearbeitet sind, um den Ringraum mit jeweils einer Endkammer (69, 70) zu verbinden und Rückschlagventile (63, 64) vorgesehen sind, die in jeder Leitung (66, 67) vorgesehen sind, um ein Rückfließen von Fluid aus den Endkammern (69, 70) in den Ringraum zu verhindern.

8. Vorrichtung nach einem der Ansprüche 1-5, dadurch gekennzeichnet, daß das System zur selektiven Bewegung einer Fluidmasse im Inneren des hohlen horizontalen Rohrs ein Paar flexibler Membranen (161, 162) aufweist, die im Inneren des hohlen Rohres angeordnet und dicht an der Seitenwand des hohlen Rohres in zwei Radialebenen befestigt sind, die von den Enden des Rohres beabstandet sind, wobei die Auffüllmittel des flüssigen Fluids für den freien Raum zwischen den Membranen (161, 162) vorgesehen sind und eine Vorrichtung (103) zum Liefern eines gasförmigen, unter Druck stehenden Fluids, sowie einem Leitungssystem zur selektiven Verbindung zwischen der Vorrichtung (103) zum Speisen mit gasförmigem Druckfluid und jeder der Kammern variablen Volumens, die zwischen den flexiblen Membranen und den Enden des Hohlrohres angeordnet sind, wobei das Leitungssystem zur selektiven Verbindung Servoventile (104) aufweist, die von Steuersignalen betätigt werden, die von der Meßvorrichtung der Unwucht ausgegeben werden.

9. Vorrichtung nach einem der Ansprüche 1-5, dadurch gekennzeichnet, daß das System zur selektiven Bewegung einer Fluidmasse im Inneren des horizontalen Hohlrohrs erste und zweite Kammern (261, 262) aufweist, die durch feste Trennwände eingegrenzt sind und voneinander durch eine transversale feste Trennwand getrennt sind, die die Rotationsachse des Halters einschließt, wobei Mittel (2) zum Auffüllen einer der Kammern (261, 262) mit flüssigem Fluid sowie Leitungen (206) zur Verbindung der beiden Kammern (261, 262) miteinander und eine Vorrichtung (203) zum Speisen eines unter Druck stehenden gasförmigen Fluids und eine selektive Verbindungsleitungsanordnung zwischen der Vorrichtung (203) zur Speisung des Druckgasfluids und jeder der Kammern (261, 262) vorgesehen sind, wobei die Leitungsanordnung zur selektiven Verbindung Servoventile (204) aufweist, die von Steuersignalen betätigt werden, die von der Vorrichtung zur Messung der Unwucht ausgegeben werden.

10. Vorrichtung nach Anspruch 8 oder 9, dadurch gekennzeichnet, daß das gasförmige Druckfluid Druckluft ist.

11. Vorrichtung nach einem der Ansprüche 6 und 7, gekennzeichnet durch magnetische Mittel zur Zentrierung des freibeweglichen Kolbens (6) in der Ruhestellung der Maschine.

12. Vorrichtung nach einem der Ansprüche 1-11, dadurch gekennzeichnet, daß die Steuerung des Systems zur selektiven Bewegung einer Fluidmasse im Inneren des horizontalen Hohlrohres von der Vorrichtung zur Messung der Unwucht lösbar ist, während der Dreharm der Zentrifuge mit geringer Geschwindigkeit rotiert, wobei die Gleichgewichtmasse in einer Neutronenlage gehalten wird.

13. Vorrichtung nach einem der Ansprüche 1-12, gekennzeichnet durch einen Dreharm (20), bestehend aus zwei Hohlrohren (25), die parallel zueinander verlaufen und jeweils mit einem System zur selektiven Bewegung einer Fluidmasse im Inneren der Bohrung des entsprechenden Rohres versehen sind, und dadurch, daß jedes der Systeme zur selektiven Bewegung einer Fluidmasse von einer gemeinsamen Vorrichtung zur Messung der Unwucht gesteuert wird.

Fig-1

# Fig.2

# Fig.3

Fig. 4

Fig.5

$U_A$

$U_{\Delta M}$

A  A'

$U_{\Delta m}$

$+\alpha$

0  90  180  270  0  $\theta$

Fig.6A

$U_B$

$U_{BM}$

B  $M \grave{a} R_0 = R$

$M \grave{a} R_1 = R - \Delta R$

$\theta$

B'

$U_{Bm}$

Fig.6B

$U_C$

$U_{CM}$

C

$\theta$

$U_{Cm}$

Fig.6C

$U_D$

$U_{DM}$

D

$\theta$

$U_{Dm}$

Fig.6D

Fig.7

26  270°  23  25  20  27

C

$-\alpha$

180°  B  Q  D  R  $\Delta R$  M  0°

$+\alpha$

A  25

90°

Fig.8

V

E  $U_{\Delta M} + U_{CC}$

$U_{CC}$

0  90  180  270  0  90  180  $\theta$

$\theta_1$  $\theta_2$

$-U_{\Delta M} + U_{CC}$

18

Fig. 5